(19) Europäisches Patentamt

European Patent Office

Office européen des brevets

(11) **EP 1 666 890 A1**

(12) **EUROPEAN PATENT APPLICATION**

(43) Date of publication:
07.06.2006 Bulletin 2006/23

(51) Int Cl.:
*G01P 15/08* (2006.01)   *G01P 7/00* (2006.01)
*G05B 19/19* (2006.01)

(21) Application number: 05025807.8

(22) Date of filing: 25.11.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.11.2004 JP 2004347005**

(71) Applicant: **FANUC LTD**
**Minamitsuru-gun,**
**Yamanashi 401-0597 (JP)**

(72) Inventors:
• **Taniguchi, Mitsuyuki**
**Gotenba-shi**
**Shizuoka 412-0045 (JP)**
• **Imai, Keisuke**
**Minamitsuru-gun**
**Yamanashi 401-0301 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Rotary shaft control apparatus**

(57)   The invention aims to detect only an angular acceleration without using an angular acceleration sensor, even in a situation where not only acceleration due to rotational motion but also acceleration due to translational motion is expected. Two acceleration sensors are mounted on a rotating body at positions located on the same radial line and are oriented in a direction that detects the tangential acceleration of the rotation, and the angular acceleration of the rotation is calculated from accelerations X1 and X2 detected by the two sensors.

Fig.2

ACCELERATION, a, OF TRANSLATIONAL SHAFT

ANGULAR ACCELERATION, b, OF ROTARY SHAFT

COMPONENT a′ OF ACCELERATION OF TRANSLATIONAL SHAFT DETECTED IN DETECTION DIRECTION

**Description**

BACKGROUND OF THE INVENTION

1. Field of the Invention

The present invention relates to a rotary shaft control apparatus that uses an angular acceleration detector for detecting the angular acceleration of a rotating body.

2. Description of the Related Art

When controlling a rotary shaft in a machine tool, it is general practice to perform feedback control by detecting the rotational angle/rotational speed of a rotating body and by computing the amount of control of a servo motor from the difference between the detected angle/speed and its command value. However, in the control of an indexing table, for example, the rotating body may vibrate due to the presence of a low-rigidity part such as a joint connecting between the rotating body and the detector. One possible method of addressing this problem would be to detect the angular acceleration of the rotating body and compensate the command value accordingly.

This method would require the use of an angular acceleration sensor in order to detect the angular acceleration, but this kind of sensor is not in general use and is expensive.

Another possible method would be to mount an acceleration sensor on the rotating body so as to detect the tangential acceleration of the rotating body, and to obtain the angular acceleration by dividing the acceleration detected by the sensor by the radius of the sensor mounting position.

However, in the case of a mechanical construction in which the entire structure of the rotating body and its rotary shaft is mounted on a translational shaft undergoing translational motion, it is not possible to detect the angular acceleration by itself because the acceleration detected by the acceleration sensor contains the acceleration of the translational shaft.

SUMMARY OF THE INVENTION

Accordingly, it is an object of the present invention to provide a detection method, for use with a rotary shaft control apparatus, that can detect only the angular acceleration without using an angular acceleration sensor which is not in general use and is expensive, even in a situation where not only the acceleration due to rotational motion, but also the acceleration due to translational motion, is expected.

According to the present invention, there is provided a rotary shaft control apparatus comprising: a servo motor; a rotating body driven by the servo motor; a detector for detecting at least one of the rotational angle and rotational angular speed of the rotating body; a control processor for computing the amount of control of the servo motor, based on a detection value fed from the detector and on a command value for at least one of the rotational angle and rotational angular speed of the rotating body; a plurality of acceleration sensors mounted on the rotating body and located at different distances from a rotary shaft thereof; an angular acceleration calculator for calculating rotational angular acceleration of the rotating body from the values of accelerations detected by the plurality of acceleration sensors; and a compensation calculator for compensating at least one of the rotational angle command value, the rotational angular speed command value, and an electric current command value for the servo motor, in accordance with the rotational angular acceleration calculated by the angular acceleration calculator.

BRIEF DESCRIPTION OF THE DRAWINGS

Figure 1 is a diagram showing one example of a sensor mounting position in an angular acceleration detector according to the present invention;
Figure 2 is a diagram for explaining the basic principle of detection according to the present invention;
Figure 3 is a block diagram showing the configuration of one example of a rotary shaft control apparatus according to the present invention; and
Figure 4 is a diagram showing another example of the sensor mounting position in the angular acceleration detector according to the present invention.

## DESCRIPTION OF THE PREFERRED EMBODIMENTS

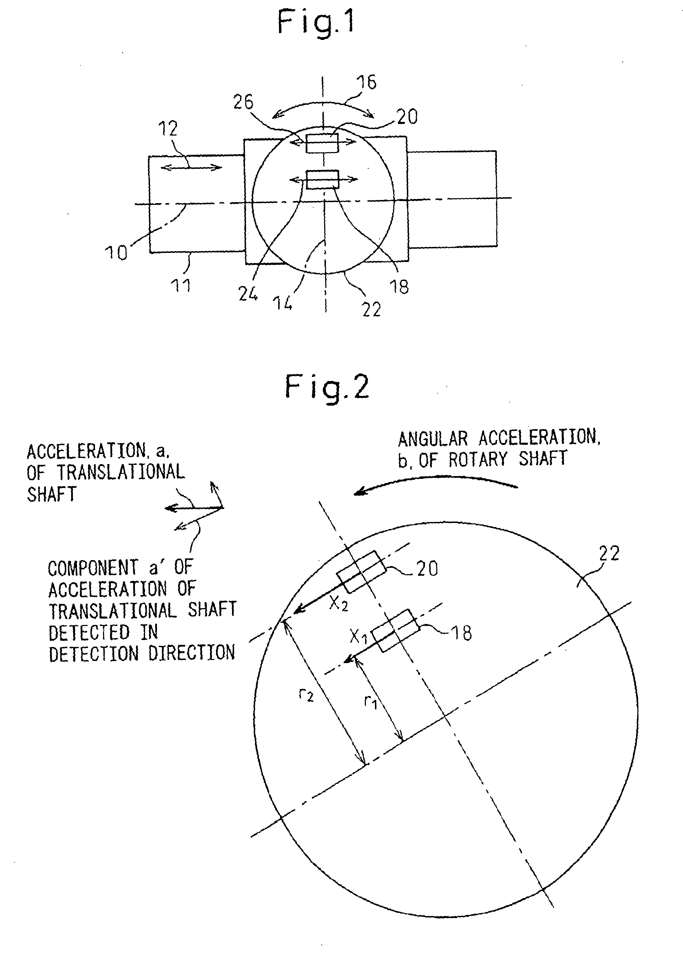

Figure 1 is a diagram showing one example of a sensor mounting position in an angular acceleration detector according to the present invention.

In Figure 1, reference numeral 10 indicates the center of a translational shaft, and arrow 12 indicates the direction of its movement. Reference numeral 14 indicates a rotary shaft mounted on the translational shaft 10, and arrow 16 indicates the direction of its rotation. Further, reference numerals 18 and 20 indicate two acceleration sensors attached to a rotating body 22 mounted on the rotary shaft 14, and arrows 24 and 26 indicate the acceleration detection directions of the respective acceleration sensors. Preferably, the acceleration sensors 18 and 20 are arranged on the same radial line and are oriented in a direction that detects the tangential acceleration of the rotation so that the acceleration due to translational motion is equally added thereto.

As shown in Figure 2, when the mounting positions of the sensors 18 and 20, measured in terms of radius, are denoted by r1 and r2, and when the component of the acceleration, a, of the translational shaft detected in the sensor detection direction is denoted by a', and the angular acceleration of the rotary shaft by b, then the accelerations X1 and X2 detected by the respective sensors 18 and 20 are each given by the sum of the component a' detected in the acceleration sensor detection direction and the tangential acceleration r1*b or r2*b occurring due to the angular acceleration of the rotary shaft, as shown in the following equations.

$$X1 = a' + r1*b$$

$$X2 = a' + r2*b$$

From these equations, the angular acceleration, b, of the rotary shaft can be calculated as shown below, that is, only the angular acceleration of the rotary shaft mounted on the translational shaft can be detected using the two acceleration sensors.

$$b = (X1 - X2)/(r1 - r2)$$

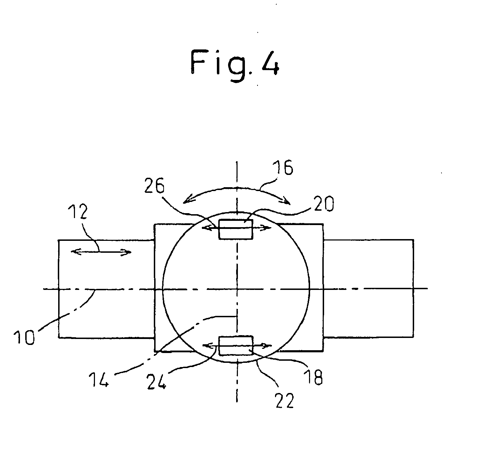

Here, X1, X2, a', and b are each a vector quantity defined in a coordinate system formed by the straight lines joining the respective acceleration sensors to the rotary shaft of the rotating body with the rotary shaft taken as its center. Accordingly, when the sensors 18 and 20 are arranged opposite each other about the center of rotation of the rotating body, as shown in Figure 4, the following equation should apply.

$$b = (X1 - X2)/(r1 + r2)$$

The acceleration sensors 18 and 20 can each be constructed from a known acceleration sensor which comprises, for example, a piezoelectric resistive element, formed by a semiconductor process, for detecting the force applied to a weight and a post supporting the weight.

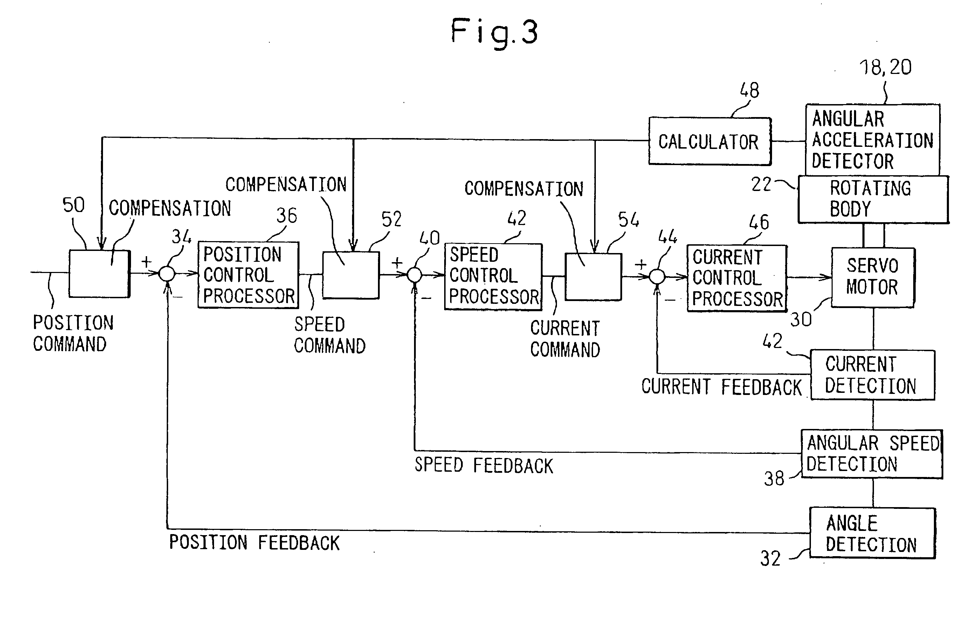

Figure 3 is a block diagram showing the configuration of a rotary shaft control apparatus in which the above angular acceleration detector is used. In Figure 3, the translational shaft is not shown.

In Figure 3, an angle detection value 32 detected by an encoder connected to a servo motor 30 is used as a position feedback signal and, from the difference (34) between this signal and a position command, a position control processor 36 computes a speed command using, for example, a known PID operation. Next, an angular speed value 38 obtained, for example, from the time differentiation of the angle detection value is used as a speed feedback signal and, from the difference (40) between this signal and the speed command, a speed control processor 42 computes an electric current command using, for example, a known PID operation. Further, the electric current of the servo motor 30 is detected and, from the difference (44) between the electric current detection value 43 and the electric current command, an electric current control processor 46 computes an electric current control value using, for example, a known PID operation, and supplies the control value to the servo motor 30.

The value of the rotational angular acceleration of the rotating body 22, calculated by a calculator 48 from the accelerations detected by the acceleration sensors 18 and 20 mounted on the rotating body 22, is used for the compensation (50) of the position command, the compensation (52) of the speed command, and the compensation (54) of the electric current command. The calculation for the compensation is carried out using, for example, the following equation.

```
(Compensated command value) = (Command value before
compensation) + (Coefficient) × (Angular acceleration
detection value)
```

The coefficient in the above equation is determined by trial and error so that the vibration of the rotating body is suppressed or eliminated.

**Claims**

1.   A rotary shaft control apparatus comprising:

   a servo motor;
   a rotating body driven by said servo motor;
   a detector for detecting at least one of the rotational angle and rotational angular speed of said rotating body;
   a control processor for computing the amount of control of said servo motor, based on a detection value fed from said detector and on a command value for said at least one of the rotational angle and rotational angular speed of said rotating body;
   a plurality of acceleration sensors;
   an angular acceleration calculator for calculating the rotational angular acceleration of said rotating body from values of accelerations detected by said plurality of acceleration sensors; and
   a compensation calculator for compensating at least one of said rotational angle command value, said rotational angular speed command value, and an electric current command value for said servo motor, in accordance with said rotational angular acceleration calculated by said angular acceleration calculator.

2.   A rotary shaft control apparatus according to claim 1, wherein said plurality of acceleration sensors are arranged on a straight line passing through the center of rotation of said rotating body.

3.   A rotary shaft control apparatus according to claim 2, wherein two acceleration sensors are arranged on said straight line in such a manner as to be positioned opposite each other about said center of rotation.

4.   A rotary shaft control apparatus according to claim 1, wherein said plurality of acceleration sensors are oriented in a direction that detects a tangential rotational acceleration of said rotating body.

# Fig.1

# Fig.2

ACCELERATION, a,
OF TRANSLATIONAL
SHAFT

ANGULAR ACCELERATION,
b, OF ROTARY SHAFT

COMPONENT a' OF
ACCELERATION OF
TRANSLATIONAL SHAFT
DETECTED IN
DETECTION DIRECTION

# Fig.3

POSITION
COMMAND

SPEED
COMMAND

CURRENT
COMMAND

POSITION FEEDBACK

SPEED FEEDBACK

CURRENT FEEDBACK

COMPENSATION

COMPENSATION

COMPENSATION

POSITION
CONTROL
PROCESSOR

SPEED
CONTROL
PROCESSOR

CURRENT
CONTROL
PROCESSOR

CALCULATOR

ANGULAR
ACCELERATION
DETECTOR

ROTATING
BODY

SERVO
MOTOR

CURRENT
DETECTION

ANGULAR SPEED
DETECTION

ANGLE
DETECTION

EP 1 666 890 A1

# Fig. 4

**European Patent Office**

**EUROPEAN SEARCH REPORT**

Application Number

EP 05 02 5807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | PATENT ABSTRACTS OF JAPAN vol. 2003, no. 12, 5 December 2003 (2003-12-05) -& JP 2005 156496 A (MITSUBA CORP), 16 June 2005 (2005-06-16) * abstract * * paragraphs [0011] - [0025]; figures 1-4 * | 1-4 | INV. G01P15/08 G01P7/00 G05B19/19 |
| Y | SCHULZ J: "BESCHLEUNIGUNGSAUFNEHMER FUER FEINPOSITIONIERUNG. AN ACCELERATION TRANSDUCER FOR POSITIONING DRIVES IN PRECISON ENGINEERING" F & M. FEINWERKTECHNIK MIKROTECHNIK MESSTECHNIK, HANSER, MUNCHEN, DE, vol. 103, no. 3/4, 1 April 1995 (1995-04-01), pages 165-167, XP000516413 ISSN: 0944-1018 * page 165, left-hand column, paragraph 1 - page 167, left-hand column, paragraph 3; figures 1-3 * | 1-4 | |
| Y | BUDIG P K ET AL: "ZUR ANWENDUNG EINES BESCHLEUNIGUNGSSENSORS IN ANTRIEBSSYSTEMEN" ELEKTRIE, VEB VERLAG TECHNIK. BERLIN, DD, vol. 44, no. 6, January 1990 (1990-01), pages 205-206, XP000149331 ISSN: 0013-5399 * the whole document * | 1-4 | TECHNICAL FIELDS SEARCHED (IPC) G01P G05B |
| A | US 2002/011111 A1 (OTSUCHI TETSURO ET AL) 31 January 2002 (2002-01-31) | | |

The present search report has been drawn up for all claims

| Place of search | Date of completion of the search | Examiner |
|---|---|---|
| The Hague | 16 March 2006 | Pflugfelder, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 666 890 A1

## ANNEX TO THE EUROPEAN SEARCH REPORT
## ON EUROPEAN PATENT APPLICATION NO.

EP 05 02 5807

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2006

| Patent document cited in search report | | Publication date | Patent family member(s) | | Publication date |
|---|---|---|---|---|---|
| JP 2005156496 | A | 16-06-2005 | NONE | | |
| US 2002011111 | A1 | 31-01-2002 | CN | 1334465 A | 06-02-2002 |

For more details about this annex : see Official Journal of the European Patent Office, No. 12/82